# EUROPEAN PATENT SPECIFICATION

(11) **EP 1 300 080 B1**
(45) Date of publication and mention of the grant of the patent: **22.09.2004**
(21) Application number: 02380205.1
(22) Date of filing: 03.10.2002
(51) Int. Cl.: A21C 9/04

(54) **Granular product feeding group for filled cookie manufacturing installations**
Vorrichtung zum Zuführen von teilchenförmigem Gut für Anlagen zur Herstellung von gefüllten Keksen
Dispositif d'alimentation de produit granulaire pour installations de fabrication de biscuits fourrés

(30) Priority: 04.10.2001 ES 200102219
(43) Date of publication of application: 09.04.2003
(73) Proprietor: SOS Cuétara, S.A., 28046 Madrid (ES)
(72) Inventor: Salazar Bello, Jesus Ignacio, 28046 Madrid (ES)
(74) Representative: Carpintero Lopez, Francisco

(56) References cited:
- WO-A-00/27208
- FR-A- 2 282 806
- GB-A- 2 204 570
- US-A- 2 434 339
- US-A- 2 868 357
- US-A- 3 648 596

## Description

### OBJECT OF THE INVENTION

The present invention relates to a feeding group for granular products as per the preamble fo claim 1, such as suitably ground cereals, nuts, etc. that is meant to form part of an installation for manufacturing cookies filled with said granular products. Such a feeding group is disclosed by document WO-A-00/27208.

The object of the invention is to obtain a device that can supply said granular products in a dosed and ordered manner to the continuous cookie sheet on top of which is later placed a second sheet that together with the first sheet will enclose the amounts of granular product, suitably separated, corresponding to the various units or filled cookies.

Thus, the invention lies within the field of foodstuff machinery, specifically in the field of machinery for manufacture of edible cookies.

### BACKGROUND OF THE INVENTION

EP-A-1 295 528 describes both a filled cookie and the method for manufacture thereof.

Said filled cookie, with a filling that is essentially a granular material of the aforementioned types, basically comprises two cookie layers that are sealed against each other around their entire perimeter, to form a closed pocket that houses the granular product within, thus suitably containing it and concealing from the outside in a longitudinal sense with a clear differentiation of flavors between the two types of basic products used in the cookie as a whole.

To obtain this type of cookie a continuous band of cookie dough is generated, with a predefined width and indefinite length, on which are deposited longitudinal bands of the essentially granular material, duly separated, and on this assembly is later deposited a second continuous band of cookie dough, with this multi-layered assembly cut in a longitudinal and in a transverse sense in order to obtain the individual cookies, which are later baked.

### DESCRIPTION OF THE INVENTION

The feeding group of the invention as per claim 1 allows implementing one of the stages of the method described in the previous paragraph, specifically incorporation of the essentially granular material to the continuous band of cookie dough that occupies the bottom level in the production assembly.

For this purpose, and more specifically, said group comprises a chassis meant to be secured to the bedplate of the installation on which moves the conveyor belt which carries the continuous lower layer of cookie dough that arrives from the corresponding layering group that is not part of the invention and is placed prior to it in said bedplate. Said chassis supports an upper hopper for supplying the essentially granular material, the lower outlet opening of said hopper being coupled at a suitable distance to a vibrating tray which serves a two-fold purpose: on one hand as an outlet of the material from the hopper and on the other to effect a transverse distribution of the material, extending throughout the entire width of the aforementioned tray.

The flow rate can be adjusted by changing the intensity of vibration, for which purpose the vibrator fitted to said tray is in turn complemented by a speed regulator for its drive mechanism.

Said vibrating tray, which is orientated in the sense of advance of the conveyor belt with a slight inclination in said sense to favor the longitudinal displacement of the granular product, pours said product into a plurality of small hoppers for collection and distribution that are transversally aligned and have their openings transversally adjacent. Said hoppers are provide with corresponding vertical chutes, suitably spaced, which pour the material onto a series of lower horizontal routing ducts that are separated from the conveyor belt by a distance such that they are in turn suitably separated from the continuous band of cookie dough on which the longitudinal strips of granular product must be deposited, the latter thus being separated by an amount determined by the separation between said chutes.

The routing ducts are open on the bottom and consist of only two elastically deformable side walls, so that fitting clips of different size on said side walls allows to change at will the outlet width of said ducts and thereby the width of the longitudinal strips of granular product, according to the specific requirements of each case.

### DESCRIPTION OF THE DRAWINGS

As a complement of the description and in order to aid a better understanding of the characteristics of the invention, according to an example of a preferred embodiment, the present description is accompanied by a set of drawings that form an integral part of the description.

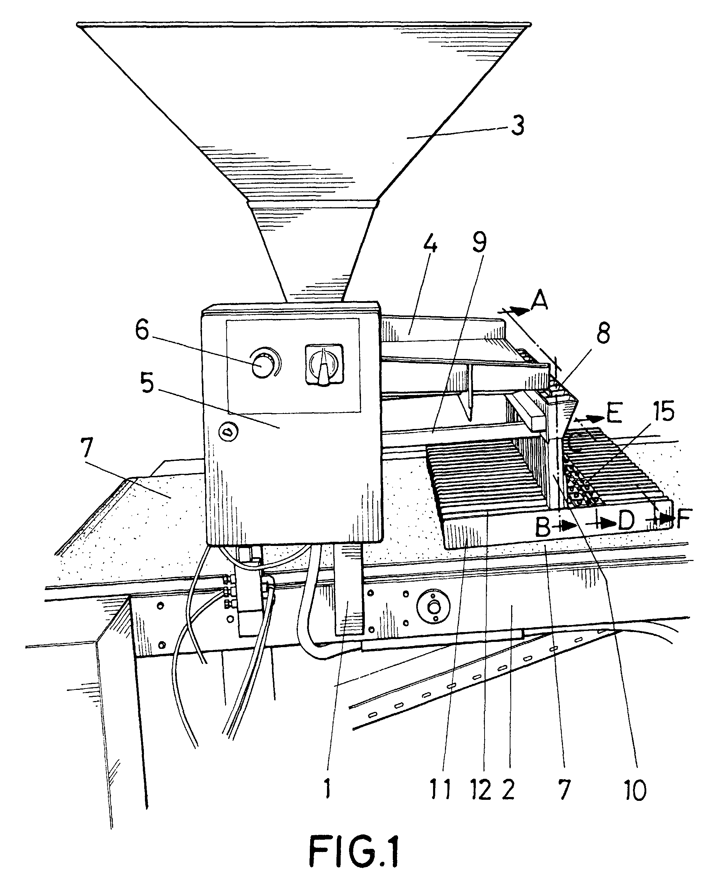

Figure 1 shows a perspective view of a granular product feeding group for filled cookie manufacturing installations, according to the object of the present invention.

Figure 2 shows a cross-sectional enlarged view of the assembly shown in the previous figure, at the area of the hoppers for collection and distribution of the granular product, along the line A-B of figure 1.

Figure 3 shows a cross-sectional enlarged view of the area of the routing ducts, along the line C-D of figure 1.

Figure 4 shows, finally, another cross-sectional enlargement of the area of the routing ducts, near their outlet, along the E-F line of figure 1.

### PREFERRED EMBODIMENT OF THE INVENTION

In view of the figures, it can be seen that the group of the invention comprises a chassis (1) that is suitably anchored to the bedplate (2) on which are mounted the aforementioned feeding group and the other elements of the filled cookie manufacturing installation, which chassis (1) suitably supports in a raised position a hopper (3) for feeding the granular product used to fill the cookies, with the lower outlet opening of said hopper (3) placed opposite a vibrating tray (4) that is aided by a vibrator housed in a case or cabinet (5) with a control (6) that allows controlling the speed of the drive mechanism of the vibrator and with it the degree of vibration of the tray (4), proportional to the flow of granular product supplied.

The tray (4) is orientated in the direction of advance of the conveyor belt (7) and with a slight downwards inclination in said sense, in order to facilitate the advance of the granular product with the vibration. Said tray (4) leads to a plurality of small collection and distribution hoppers (8), aligned transversally, with openings that are in contact and are provided in a number that matches that of the longitudinal strips of granular material meant to be deposited on the continuous band of cookie dough, not shown in the drawings, that is carricd by the conveyor belt (7).

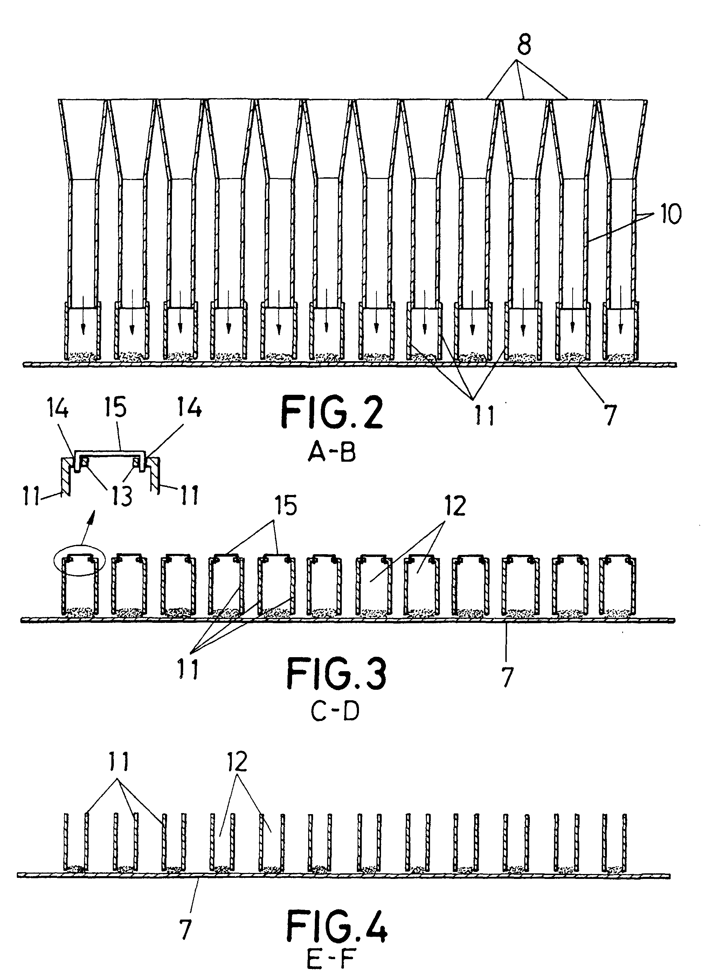

Said collection and distribution hoppers (8) are attached to the chassis (1) by a supporting arm (9) and are prolonged on the bottom as corresponding vertical outlet chutes (10) that, because of the truncated pyramid shape and downwards convergence of the hoppers (8) are considerably spaced form each other, with each one receiving on their lower end a pair of longitudinal slats (11) that define a duct for routing the cereals into longitudinal strips, which ducts (12) as shown in figures 3 and 4 converge substantially in the sense of advancement of the conveyor belt (7) to allow a greater width of the tubes (10) and, thereby, to facilitate the fall of the granular product.

Said slats (11) that determine the routing ducts (12) are separated from the conveyor belt (7) at their lower edges sufficiently to allow the continuous band of cookie mass to pass under them without touching, but preventing a lateral outlet of the granular product.

The width of the routing ducts (12) at their outlet can be adjusted within certain limits by an elastic deformation of the slats (11) which determine the side walls of said ducts (12), for which purpose said slats (11) are provided at the level of the opening with a slight inner shaping (13) with orifices (15) on the side behind the chutes (10), to which can be selectively coupled clips (15) or any other suitable attachment means that allows to deform said slats (11) to obtain a greater or lesser separation at their free front end where the granular product exits, thereby providing the most suitable width for the longitudinal strips of granular product.

## Claims

1. Granular product feeding group for filled cookie manufacturing installations, specifically cookies comprised of two layers of cookie dough which are sealed on their entire perimeter to define an enclosure which contains the granular product, such as suitably ground cereals or nuts, which comprises a hopper (3) that supplies the granular product used to a vibrating tray (4) oriented in the sense of advance of a conveyor belt (7), **characterized in that** the conveyor belt carries a lower continuous band of cookie dough and **in that** the tray (4), being slightly inclined downwards in said sense, is leading to a transverse arrangement of small collection and distribution hoppers (8) with adjacent openings that are inferiorly prolonged as corresponding chutes (10) which open into corresponding routing ducts (12) that are each determined by a pair of side slats (11), the lower end of which slats (11) is placed above the said continuous band of cookie dough such that the said routing ducts (12) are separated from each other by an amount corresponding to the separation intended for the longitudinal strips of granular material to be deposited on the lower continuous band of cookie dough.

2. Granular product feeding group for filled cookie manufacturing installations, according to claim 1, **characterized in that** the outlet of the hopper (3) that supplies the granular product is distanced from the vibrating tray (4) by an amount such that the product may exit when the tray (4) vibrates, with the drive mechanism of the vibrator of the tray (4) being provided with a speed regulator (6) that allows to control at will the flow rate of product supplied to said tray (4).

3. Granular product feeding group for filled cookie manufacturing installations, according to previous claims, **characterized in that** the collection and distribution hoppers have an inverted truncated pyramid shape, so that they converge at their lower end towards the chutes (10) associated with them and the slats (11) determining the routing ducts (12), with said elements (8), (10) and (12) joined to each other with the aid of a common support (9) which is secured to the installation bedplate (2) through the group chassis (1).

4. Granular product feeding group for filled cookie manufacturing installations, according to previous claims, **characterized in that** the slats (11) determining the routing ducts (12) are elastically deformable and with a top edge (12) that is shaped and is provided with orifices (14) for selectively fitting clips (15) of different width that allow to control at will the width of the routing ducts (12) at their output, in order to control in turn the width of the longitudinal strips of granular material deposited on the continuous band of cookie dough.

## Patentansprüche

1. Zufuhranlage für kömige Produkte für Herstellungsanlagen von gefüllten Keksen, konkret von Keksen, die basierend auf zwei Keksschichten oder -scheiben strukturiert sind, die untereinander auf dem gesamten Umfang abschliessen und so ein geschlossenes Gehäuse bilden, das in seinem Inneren das körnige Produkt aufnimmt, wie zum Beispiel Getreide oder passend gemahlene Trockenfrüchte, an der ein Trichter (3) beteiligt ist, der das kömige Produkt, um das es sich handelt, einem Schütteltablett (4) zuführt, das in der Fortbewegungsrichtung des Fliessbands (7) ausgerichtet ist, **dadurch gekennzeichnet, dass** das Fliessband über ein unteres Endlosband mit Keksteig verfügt und darin, dass das Tablett (4) eine leichte Abwärtsneigung in diese Richtung aufweist und in eine Queranordnung aus kleinen Auffang- und Verteilertrichtern (8) mündet, deren Einfüllstücke nebeneinander liegen und im Inneren durch jeweilige Fallrohre (10) verlängert werden, die sich auf jeweilige Kanalisierungsrohre (12) ergiessen, von denen jedes durch ein Paar längliche Unterteilungswände (11) definiert ist, deren unterer Rand oberhalb des genannten Endlosbands für Keksteig platziert wird, so dass diese Kanalisierungsrohre (12) voneinander einen Abstand haben, der mit dem Abstand übereinstimmt, der für die länglichen Abschnitte für das körnige Produkt vorgesehen ist, das auf das untere Endlosband mit dem Keksteig aufgebracht werden soll.

2. Zufuhranlage für kömige Produkte für Herstellungsanlagen von gefüllten Keksen, gemäss Anspruch 1 **dadurch gekennzeichnet, dass** die Mündung des Zufuhrtrichters (3) des körnigen Produkts von dem Schütteltablett (4) soweit entfernt ist, dass das Produkt austreten kann, wenn das besagte Tablett (4) vibriert, wobei vorgesehen ist, dass die Antriebsvorrichtung für das Vibrierelement, das dem Tablett (4) zugeordnet ist, ihrerseits über einen Geschwindigkeitsregler (6) verfügt, durch den der Strom des Produkts geregelt werden kann, das dem Tablett (4) zugeführt wird.

3. Zufuhranlage für kömige Produkte für Herstellungsanlagen von gefüllten Keksen, gemäss den vorangegangenen Ansprüchen, **dadurch gekennzeichnet, dass** die Auffang- und Verteiltrichter eine umgekehrte Pyramidenform aufweist, so dass sie an ihrem unteren Ende zusammenlaufen in Richtung der Fallrohre (10), die mit diesen und den Unterteilungswänden (11) verbunden sind, die die Kanalisierungsrohre (12) bilden, wobei diese Elemente (8), (10) und (12) untereinander mit Hilfe eines gemeinsamen Auflagers (9) verbunden sind, das durch das Gestell (1) der Anlage an der Grundplatte (2) der Einrichtung befestigt wird.

4. Zufuhranlage für körnige Produkte für Herstellungsanlagen von gefüllten Keksen, gemäss den vorangegangenen Ansprüchen, **dadurch gekennzeichnet, dass** die Unterteilungswände (11), die die Kanalisierungsrohre (12) bilden, elastisch verformbar sind und an ihrem oberen Rand (13) Leisten und Öffnungen (14) aufweisen, um selektiv unterschiedlich breite Krampen (15) anzubringen, mittels derer die Breite der Kanalisierungsrohre (12) an ihrer Mündung kontrolliert werden kann, um so gleichzeitig die Breite der länglichen Abschnitte des körnigen Materials zu kontrollieren, das auf das Endlosband mit Keksteig aufgebracht wird.

## Revendications

1. Groupe d'alimentation de produits granulaires pour des installations de fabrication de biscuits fourrés, précisément de biscuits structurés à base de deux couches ou lames de biscuit proprement dit, qui se scellent entre eux tout le long de leur périmètre en configurant un réceptacle fermé qui loge en son sein le produit granulaire, comme par exemple des céréales ou des fruits secs dûment broyés, auquel participe une trémie (3), fournissant le produit granulaire en question à un plateau vibreur (4) orienté dans le sens de la marche de la bande transporteuse (7), **caractérisé en ce que** la bande transporteuse porte une bande inférieure continue de pâte de biscuit et **en ce que** le plateau (4) a une légère inclinaison descendante dans ce sens, lequel débouche dans un alignement transversal de petites trémies de réception et de distribution (8), à embouchures attenantes, prolongées inférieurement dans les tubes de chute (10) qui déchargent sur des canaux respectifs d'acheminement (12), chacun d'entre eux étant défini par une paire de cloisons longitudinales ( 11) dont le bord inférieur est situé par-dessus la bande continue de biscuit précitée, de manière que ces canaux d'acheminement (12) sont distancés entre eux en correspondance avec l'écartement prévu par les bandes longitudinales en matière granulaire à déposer sur la bande inférieure continue de la pâte de biscuit.

2. Groupe d'alimentation de produits granulaires pour des installations de fabrication de biscuits fourrés, selon la revendication 1, **caractérisé en ce que** l'embouchure de sortie de la trémie (3) de livraison de produit granulaire est distancée du plateau vibreur (4) dans une mesure telle permettant la sortie de produit lorsque ledit plateau (4) vibre, en ayant prévu que l'élément moteur du vibreur assistant le plateau (4) soit à son tour assisté par un régulateur de vitesse (6) qui permet de contrôler à volonté le débit du produit fourni audit plateau (4).

3. Groupe d'alimentation de produits granulaires pour des installations de fabrication de biscuits fourrés, selon les revendications antérieures, **caractérisé en ce que** les trémies de réception et de distribution ont une configuration tronc-pyramidale inversée, de manière à converger à leur extrémité inférieure, vers les tubes de chute (10) associés à celles-ci et les cloisons (11) constitutives des canaux d'acheminement (12), ces éléments (8), (10) et (12) étant solidarisés entre eux avec la collaboration d'un support commun (9) qui, à travers le châssis (1) du groupe, est fixé au banc (2) de l'installation.

4. Groupe d'alimentation de produits granulaires pour des installations de fabrication de biscuits fourrés, selon les revendications antérieures, **caractérisé en ce que** les cloisons (11) constitutives des canaux d'acheminement (12) sont élastiquement déformables et présentent leur bord supérieur (13) mouluré et pourvu d'orifices (14) pour l'implantation sélective d'agrafes (15), de différent large, permettant de contrôler à volonté le large des canaux d'acheminement (12) à la sortie de ceux-ci, pour contrôler à leur tour, le large des bandes longitudinales de la matière granulaire déposées sur la bande continue de pâte de biscuit.
